# EUROPÄISCHE PATENTSCHRIFT

(11) **EP 0 802 690 B1**
(45) Veröffentlichungstag und Bekanntmachung des Hinweises auf die Patenterteilung: **14.01.2004**
(21) Anmeldenummer: 96106088.6
(22) Anmeldetag: 17.04.1996
(51) Int. Cl.: H04Q 3/00, H04L 29/06

(54) **Steuerungseinrichtung im Intelligenten Netz**
Controller for an intelligent network
Dispositif de commande pour un réseau intelligent

(43) Veröffentlichungstag der Anmeldung: 22.10.1997
(73) Patentinhaber: SIEMENS AKTIENGESELLSCHAFT, 80333 München (DE)
(72) Erfinder: Sevcik, Maximilian, Dipl.-Ing., 81739 München (DE)

(56) Entgegenhaltungen:
- US-A- 5 327 486
- COMPUTER NETWORKS AND ISDN SYSTEMS, Bd. 27, Nr. 2, November 1994, NL, Seiten 147-154, XP000575304 LUOTONEN ET AL.: "World-Wide Web proxies"
- IEEE 13TH ANNUAL INTERNATIONAL PHOENIX CONFERENCE ON COMPUTERS AND COMMUNICATIONS, 12. - 15.April 1994, PHOENIX US, Seiten 485-490, XP000462600 TAO ET AL.: "Internet access via baseband and broadband ISDN gateways"
- BYTE, Oktober 1994, US, Seiten 51-64, XP000480909 REINHARDT: "The network with smarts"

## Beschreibung

Die Erfindung betrifft eine Steuerung des Zugangs zu Internet-Diensten.

Eine wachsende Anzahl von Internet-Nutzern verwendet PSTN/ISDN-Netze und später ATM-Netze als Zugangsnetze zu Internet Diensten, d.h. zu Anwendungen in Servern der Internet-Dienstanbieter.

In dem Dokument XP 000462600 wird ein Konzept für die Realisierung eines derartigen Zugangs offenbart.

Die Realisierung eines derartigen Zugangs ist allerdings auch mithilfe der Technik der Intelligenten Netze (IN) möglich.

Die Technik der Intelligenten Netze ist eine bekannte, in vielen Netzen eingeführte Technik zur Steuerung der Rufbehandlung in Telekommunikationsnetzen (Schmalband wie PSTN / ISDN oder Breitband wie BB-ISDN / ATM).

Ein Service Control Point (SCP) übernimmt bei jedem IN-Ruf z.B. die Steuerung von folgenden Funktionen im betreffenden Telekommunikationsnetz:
- Bestimmung der Ziel-Route und Ziel-Rufnummer in Abhängigkeit von Ursprung, Tageszeit, Rufverteilung auf Bearbeitungsstellen etc.
- Bestimmung der Vergebührung (billing, charging)
- Steuerung des Netzzugangs für authorisierte Nutzer (Gebührenkarte, Virtual Private Network - VPN).

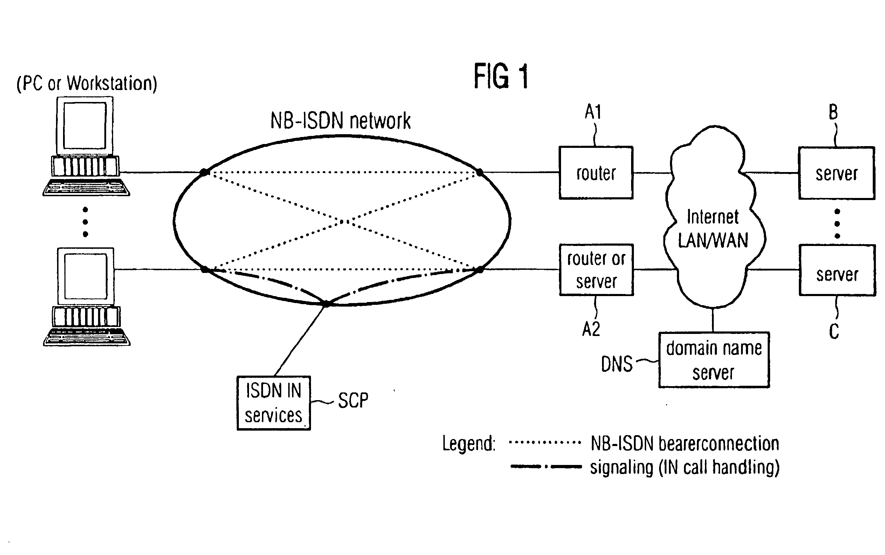

FIG 1 zeigt die bisher bekannte Struktur für den Internet-Zugang mithilfe des Intelligenten Netzes am Beispiel eines Schmalband-Netzes (Narrowband ISDN: NB-ISDN).

Der Internet-Zugang über dieses Netz weist folgende Nachteile auf:
1) Die Verbindungen im NB-ISDN Netz und die IN-Funktionen im SCP sind transparent für Internet-Anwendungen. Das NB-ISDN-Netz (gilt analog auch für Breitband ATM-Netz) bietet lediglich einen Zugang via bearer channel(s) zum geeigneten Router für bekannte Internet-Protokolle (IP-Protokolle) oder zu einem Server direkt am Netz (Bsp. A2). Das Routing von Verbindungen kann nicht für den Internet-Zugang optimiert werden. Wird z.B. der Zugang zum Server A2 gewünscht, aber die Verbindung zum Router A1 aufgebaut, transitieren die IP-Protokollpakete das evtl. langsame LAN/WAN Netz. Wünschenswert wäre eine direkte ISDN-Verbindung zu A2.
2) Die Vergebührung im NB-ISDN Zugangsnetz ist entkoppelt von Internet. Eine zusammenfassende Vergebührung ist nicht möglich.
3) Umfangreiche Sicherheitsmaßnahmen müssen in den Internet-Servern realisiert werden, da der Zugang zu Internet-Diensten via das öffentliche NB-ISDN Netz für jedermann offen ist.
4) Internet-Domain-Adressen bezeichnen die individuellen Internet-Anwendungen. Sie müssen in entsprechende IP-Adressen nach Internet-Norm umgesetzt werden (und umgekehrt) .
   Dieses im Internet bekannte Verfahren wird in einem sog. Domain Name Server (kurz DNS) realisiert. Die Adressenumsetzung am DNS wird von den IP-Routern/-Servern veranlaßt.

Der Erfindung liegt die Aufgabe zugrunde, die genannten Nachteile zu überwinden.

Diese Aufgabe wird durch die Erfindung gemäß den Merkmalen der Ansprüche 1 und 8 gelöst.

Die erfindungsgemäße Struktur für ein Intelligente Netz für Internet Anwendungen erlaubt einen Austausch der Steuerinformationen zwischen der SCP-Funktion und DNS-Funktion, indem diese beiden Funktionen nunmehr in der gleichen Einrichtung, genannt Internet Service Node, vereinigt werden. Dadurch wird es bei der Anforderung eines Internet-Dienstes über das IN ermöglicht, die optimale Route zu einem Server, der den angeforderten Internet-Dienst beinhaltet, zu ermitteln.

Durch Erweiterung der DNS-Funktion und SCP-Funktion um Zusatzinformationen werden Zusatzfunktionen gemäß den Ansprüchen 2 bis 7 ermöglicht.

Eine Ausführungsform der Erfindung ist durch Anspruch 2 angegeben. Durch diese Ausführungsform wird die Interaktionszeit verkürzt und die Handhabung von Internet-Anwendungen vereinfacht.

Eine weitere Ausführungsform der Erfindung ist durch Anspruch 3 angegeben. Durch diese Ausführungsform wird die Sicherheit der Internet-Anwendungen entscheidend verbessert, da ein NB-ISDN-Netz oder BB-ISDN-Netz als sicher gelten, bzw. der Steuerungseinrichtungs-Knoten durch vertrauenswürdige Betreiber betrieben wird.

Eine weitere Ausführungsform der Erfindung ist durch Anspruch 4 angegeben. Bei dieser Ausführungsform kann die SCP-Funktion aus Kenntnis der durch die Zugriffe auf die DNS-Funktion ausgewählten Server und Anwendungen die Vergebührung nach vorher festgelegten, flexibel änderbaren Tarifen ermitteln und mittels eines in den Telekommunikationsnetzen bekannten vergebührungsverfahrens den Nutzern anzeigen (z.B. Advice of Charge, Tickets). Die Handhabung der Vergebührung von Internet-Nutzung kann dadurch erweitert werden, und zwar um die aus den IN-Netzen bekannte Verfahren wie:
Calling cards
Pre-paid cards
Nutzung wird via kommerzielle Kreditkarten verrechnet.

Eine weitere Ausführungsform der Erfindung ist durch Anspruch 5 angegeben. Durch diese Ausführungsform kann die SCP-Funktion den Zugang zu bestimmten Internet Servern und Anwendungen einer bestimmten Nutzergruppe (User Group) vorbehalten, und zwar nach den bekannten Prinzipien des Virtual Private Networks (VPN). Die SCP-Funktion im ISN-Knoten erkennt die Mitglieder dieser Gruppe und prüft durch Abfrage in der DNS-Funktion ihre Berechtigung zum Zugriff auf bestimmte Server oder Anwendungen. Diese Ausgestaltung bietet iVm der in Anspruch 4 erläuterten Vergebührung eine individuelle Auslegung der Vergebührung (d.h individuell für jede VPN-Nutzergruppe).

Eine weitere Ausführungsform der Erfindung ist durch Anspruch 6 angegeben. Durch diese Ausführungsform wird die Fortsetzung der Interaktion am neuen Standort erleichtert (z.B. automatischer Aufbau einer Verbindung). Die Gebühren für die Nutzung des Netzes und der Internet-Anwendungen werden anhand der in der DNS-Funktion gespeicherten Information standortgerecht ermittelt.

Eine weitere Ausführungsform der Erfindung ist durch Anspruch 7 angegeben. Durch diese Ausführungsform wird es ermöglicht, daß bestimmte Internet-Anwendungen in bestimmten Servern Daten in der Steuerungseinrichtung modifizieren können, insbesondere:
- Modifikation der Routingdaten in der SCP-Funktion,
- Modifikation der Adressen und Angaben über Internet-Anwendungen in der DNS-Funkion,
- Modifikation von Berechtigungen, PIN, Vergebührungsinformation in den SCP- und DNS-Funktionen.

Im folgenden wird die Erfindung anhand eines Ausführungsbeispiels näher erläutert.

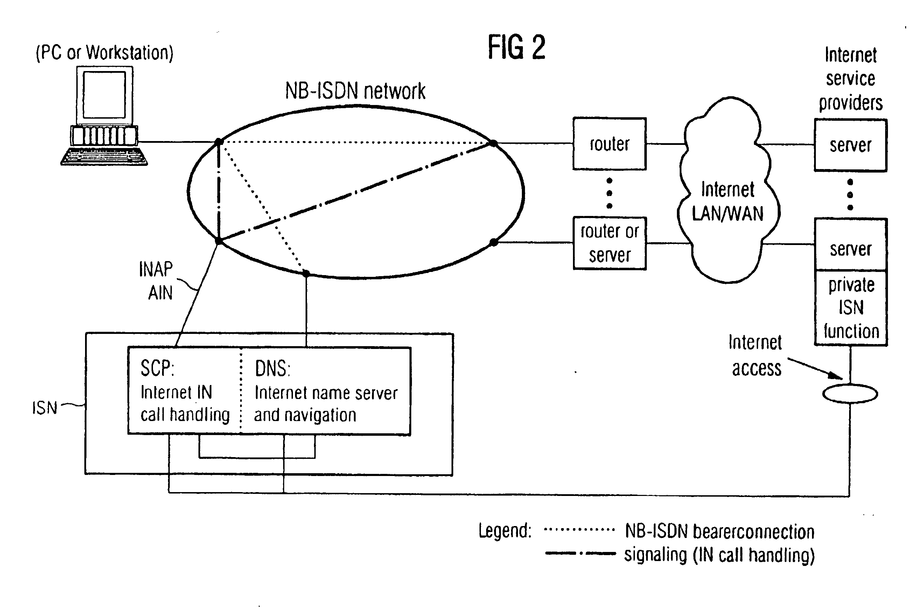

FIG 2 zeigt die erfindungsgemäße Struktur für den Internet-Zugang am Beispiel eines Schmalband-Netzes (Narrowband ISDN: NB-ISDN). Eine analoge Struktur ist für die künftigen Breitband ISDN-Dienste (ATM) anwendbar. Die DNS-Funktion entspricht dann der IN-Standardfunktion Special Resource Function (SRF).

Bei den folgenden Erläuterungen werden Randmarkierungen M1 bis M6 benutzt, um genauere Rückbezüge auf vorhergehende Erläuterungen zu ermöglichen.
M1) Bei jedem Ruf, der als Zugriff auf eine oder mehrere Internet-Anwendungen dient, wird auf der kommenden oder gehenden Seite in den jeweiligen NB-ISDN Vermittlungssystemen via bekannte IN-Protokolle INAP oder AIN die SCP-Funktion in einem Internet Service Node ISN angesteuert, der erfindungsgemäß sowohl die SCP-Funktion als auch die DNS-Funktion beinhaltet. Zur Unterscheidung der Internet-relevanten Rufe werden bekannte Mittel wie:
   - Wahl eines Dienstcodes (z.B. 1333)
   - Identität des Rufendes (Calling Line Identity) etc.
   eingesetzt.
   Aus der gleichzeitig via Signalisierung gelieferten Adresse der angeforderten Internet-Anwendung (z.B. IP-Adresse oder andere Daten aus User-to-service Signalinformation gem. ISDN-Standards) werden von der SCP-Funktion nun durch Abfragen der DNS-Funktion im gleichen ISN-Knoten die Angaben für optimales Routing (z.B. kostengünstige Verbindung) des Rufes zum betreffenden Internet-Router/Server (E.164-Adresse) ermittelt. Diese Angaben veranlassen die SCP-Funktion, mit bekannten Verfahren die betreffende Vermittlungsstelle (Service Switching Point: SSP) zu instruieren, daß diese anhand der E.164-Adresse einen entsprechenden Verbindungsaufbau durchführt.
M2) Die DNS-Funktion kann zusätzlich, zu der im Internet vorgesehenen Adressumsetzung, auch Angaben über Internet-Anwendungen in den jeweiligen Servern beinhalten (Navigationsinformation, online Hilfen etc.). Bei der Behandlung des Rufes kann die SCP-Funktion veranlassen, daß diese Information aus DNS dem Nutzer via ISDN Bearer Channel zugestellt wird, bzw. daß der Nutzer interaktiv die gewünschte Anwendung sucht. Wurde diese Anwendung gefunden, veranlaßt die DNS-Funktion automatisch die Herstellung einer ISDN Verbindung zu dieser Anwendung bzw. zu einem Router am gleichen Netz, der einen optimalen Zugang zu dieser Anwendung ermöglicht (dabei optimales Routing im Netz wie vorher erläutert). Dadurch wird die Interaktionszeit verkürzt und die Handhabung von Internet-Anwendungen vereinfacht. Dieser Ablauf kann bei jeder neuen Wahl einer Anwendung bzw. IP-Adresse wiederholt werden.
M3) Aus Kenntnis der rufenden Nutzer und ihrer in der SCP-Funktion gespeicherten Berechtigungen kann durch Abfrage der in der DNS-Funktion abgespeicherten Berechtigungs-Erfordernisse (d.h. Erfordernisse für den Zugriff auf bestimmte Server oder ihre Anwendungen) festgestellt werden, ob der betreffende Nutzer zum Zugriff auf bestimmte Server oder ihre Anwendungen berechtigt ist. Diese Berechtigungsprüfung kann mit bekannten Mitteln wie Personal Identification Number (PIN) beliebig verstärkt werden. Bei nicht berechtigten Nutzern wird die Rufbehandlung abgebrochen. Da ein NB-ISDN-Netz oder BB-ISDN-Netz als sicher gelten, bzw. der ISN-Knoten durch vertrauenswürdige Betreiber betrieben wird, wird die Sicherheit der Internet-Anwendungen damit entscheidend verbessert.
M4) Die SCP-Funktion kann aus Kenntnis der durch die Zugriffe auf DNS-Funktion ausgewählten Servern und Anwendungen die Vergebührung nach vorher festgelegten, flexibel änderbaren Tarifen ermitteln und mittels eines in den Telekommunikationsnetzen bekannten Vergebührungsverfahrens den Nutzern anzeigen (z.B. Advice of Charge, Tickets). Die Handhabung der Vergebührung von Internet-Nutzung kann erweitert werden, und zwar um die aus den IN-Netzen bekannten Verfahren wie:
   Calling cards
   Pre-paid cards
   Nutzung wird via kommerzielle Kreditkarten verrechnet
M5) Der Zugang zu bestimmten Internet Servern und Anwendungen kann einem bestimmten Nutzerkreis (User Group) vorbehalten werden, nach den bekannten Prinzipien des Virtual Private Networks (VPN). Die SCP-Funktion im ISN-Knoten erkennt die Mitglieder dieser Gruppe gemäß dem unter M1 erläuterten Verfahren und prüft in der DNS-Funktion ihre Berechtigung zum Zugriff auf bestimmte Server oder Anwendungen. Diese Funktion kann auch mit der unter M4 erläuterten Vergebührung (individuell ausgelegt für jede VPN-Nutzergruppe) kombiniert werden.
M6) Die Nutzer können mobil sein, d.h. sie können sich an beliebigen Punkten des Netzes anmelden/abmelden. Hierzu wird ihre Berechtigung gemäß dem Verfahren unter M3 (z.B. PIN-Überprüfung) durch die SCP-Funktion verifiziert. Die SCP-Funktion kann zwischen den Standortwechseln die notwendige Information zu der zuletzt benutzten Anwendung festhalten. Dadurch wird die Fortsetzung der Interaktion am neuen Standort erleichtert (z.B. automatischer Aufbau einer Verbindung, die vom neuen Standort aus einen optimalen Zugang zu dieser Anwendung gewährleistet). Die Gebühren für die Nutzung des Netzes und der Internet-Anwendungen werden anhand der in der DNS-Funktion gespeicherten Information standortgerecht ermittelt.
M7) In jedem Telekommunikationsnetz können mehrere ISN-Knoten vorhanden sein. Jeder ISN-Knoten ist selber ein Internet-Server und kann Daten mit anderen Internet-Servern austauschen (z.B. durch Dateitransfers). Dadurch können die bestimmte Anwendungen in bestimmten Servern Daten im ISN modifizieren, insbesondere:
   Modifikation der Routingdaten in der SCP-Funktion; Modifikation der Adressen und Angaben über Internet-Anwendungen in der DNS-Funkion; Modifikation von Berechtigungen, PIN, Vergebührungsinformation in den SCP- und DNS-Funktionen.

Hierzu können bestimmte Server über eine private ISN-Funktion verfügen, welche diese Modifikationen anwendungsabhängig steuert.

## Patentansprüche

1. Steuerungseinrichtung im Intelligenten Netz,
a) mit einer SCP-Komponente, die derart ausgestaltet ist, daß sie eine Anforderung zu einem IN-Dienst steuert,
**dadurch gekennzeichnet,**
**daß**
b) die SCP-Komponente des weiteren derart ausgestaltet ist, daß sie auch eine Anforderung zu einem Internet-Dienst steuert, indem sie einen Router ermittelt, über den eine optimale Route zu dem angeforderten Internet-Dienst ermöglicht wird,
c) die Steuerungseinrichtung (ISN) eine DNS-Komponente beinhaltet, die derart ausgestaltet ist, daß sie die SCP-Komponente bei der genannten Ermittlung unterstützt, indem sie die von der SCP-Komponente empfangene Adresse des angeforderten Internet-Dienstes auswertet.

2. Steuerungseinrichtung nach Anspruch 1
**dadurch gekennzeichnet,**
**daß** die DNS-Funktion Angaben über Internet-Anwendungen in den jeweiligen Servern beinhaltet, die die Steuerungseinrichtung dem Nutzer via ISDN Bearer Channel zustellen kann.

3. Steuerungseinrichtung nach einem der Ansprüche 1 oder 2
**dadurch gekennzeichnet,**
**daß**
a) in der SCP-Funktion die Berechtigungen eines bestimmten Nutzers bezüglich bestimmter Server bzw. Internet-Anwendungen abgespeichert sind,
b) in der DNS-Funktion die Berechtigungs-Erfordernisse eines Nutzers bezüglich bestimmter Server bzw. Internet-Anwendungen abgespeichert sind,
c) die SCP-Funktion derart ausgestaltet ist, daß sie die Berechtigungsprüfung eines Nutzers durchführt, indem sie die Berechtigungs-Erfordernisse für den Zugriff auf von einem Nutzer angeforderte Server bzw. Internet-Anwendungen von der DNS-Funktion abfragt und diese Erfordernisse mit den Berechtigungen des Nutzers vergleicht.

4. Steuerungseinrichtung nach einem der Ansprüche 1 bis 3
**dadurch gekennzeichnet,**
**daß**
in der SCP-Funktion die Gebühreneinheit für den Zugriff auf einen bestimmten Server bzw. eine bestimmte Internet-Anwendung abgespeichert ist.

5. Steuerungseinrichtung nach nach einem der Ansprüche 1 bis 4,
**dadurch gekennzeichnet,**
**daß**
a) in der SCP-Funktion Nutzerguppen abgespeichert sind, denen der Zugang zu bestimmten Servern bzw. Internet-Anwendungen ausschließlich vorbehalten ist,
b) die SCP-Funktion derart ausgestaltet ist, daß sie den Zugang eines Nutzers zu den genannten bestimmten Servern bzw. Internet-Anwendungen anhand der abgespeicherten Nutzergruppen prüft.

6. Steuerungseinrichtung nach nach einem der Ansprüche 1 bis 5,
**dadurch gekennzeichnet,**
**daß**
die SCP-Funktion bei mobilen Nutzern die Routing-Information zu der zuletzt benutzten Anwendung bis zur Beendigung der Benutzung speichert.

7. Steuerungseinrichtung nach nach einem der Ansprüche 1 bis 6,
**dadurch gekennzeichnet,**
**daß**
die Steuerungseinrichtung aus der Sicht anderer Internet-Server selbst einen Internet-Server darstellt und somit Daten mit anderen Internet-Servern austauschen kann.

8. Verfahren zur Steuerung des Zugangs zu Internet-Diensten über das Intelligente Netz,
demgemäß
a) einer Steuerungseinrichtung (ISN) des IN von einem IN-Tln durch Wahl eines entsprechdenen Dienstcodes signalisiert wird, daß eine Verbindung zu einem Internet-Dienst angefordert wird,
b) von der Steuerungseinrichtung ein Router ermittelt wird, über den eine optimale Route zu dem angeforderten Internet-Dienst ermöglicht wird,
c) die SCP-Komponente von der DNS-Fkt. bei der genannten Ermittlung durch die Auswertung der Adresse des angeforderten Internet-Dienstes unterstützt wird,
d) von der Steuerungseinrichtung veranlaßt wird, daß zu dem genannten Server über die ermittelte Route eine Verbindung aufgebaut wird.

## Claims

1. Control device in the intelligent network,
a) having an SCP component which is designed such that it controls a request for an IN service,
**characterized**
**in that**
b) the SCP component is additionally designed such that it also controls a request for an Internet service by ascertaining a router which allows an optimum route to the requested Internet service,
c) the control device (ISN) contains a DNS component which is designed such that it assists the SCP component in said ascertainment by evaluating the requested Internet service's address received from the SCP component.

2. Control device according to Claim 1,
**characterized**
**in that** the DNS function contains statements about Internet applications in the respective servers which the control device is able to deliver to the user via ISDN bearer channel.

3. Control device according to either of Claims 1 and 2,
**characterized**
**in that**
a) the SCP function stores a particular user's authorizations for particular servers or Internet applications,
b) the DNS function stores a user's authorization requirements for particular servers or Internet applications,
c) the SCP function is designed such that it checks a user's authorization by requesting from the DNS function the authorization requirements for accessing servers or Internet applications requested by a user and comparing these requirements with the user's authorization.

4. Control device according to one of Claims 1 to 3,
**characterized**
**in that**
the SCP function stores the charge unit for accessing a particular server or a particular Internet application.

5. Control device according to one of Claims 1 to 4,
**characterized**
**in that**
a) the SCP function stores user groups for which access to particular servers or Internet applications is reserved exclusively,
b) the SCP function is designed such that it checks a user's access to said particular servers or Internet applications on the basis of the stored user groups.

6. Control device according to one of Claims 1 to 5,
**characterized**
**in that**,
for mobile users, the SCP function stores the routing information for the last application used until the end of use.

7. Control device according to one of Claims 1 to 6,
**characterized**
**in that**,
from the point of view of other Internet servers, the control device itself is an Internet server and is thus able to interchange data with other Internet servers.

8. Method for controlling access to Internet services via the intelligent network,
according to which
a) an IN subscriber selects an appropriate service code in order to signal to a control device (ISN) in the IN that a connection is being requested for an Internet service,
b) the control device ascertains a router which permits an optimum route to the requested Internet service,
c) the SCP component is assisted in said ascertainment by the DNS function as a result of evaluation of the address of the requested Internet service,
d) the control device sets up a connection to said server via the ascertained route.

## Revendications

1. Dispositif de commande dans le réseau intelligent,
a) comprenant une composante SCP exécutée de telle manière qu'elle commande une demande vers un service IN,
**caractérisé en ce que**
b) la composante SCP est en outre exécutée de telle manière qu'elle commande également une demande vers un service Internet, du fait qu'elle détermine un routeur, au moyen duquel un routage optimal est rendu possible vers le service Internet demandé,
c) le dispositif de commande (ISN) comprend une composante DNS qui est exécutée de telle manière qu'elle soutient la composante SCP lors de ladite détermination, du fait qu'elle évalue l'adresse reçue par la fonction SCP du service Internet demandé.

2. Dispositif de commande selon la revendication 1, **caractérisé en ce que** la fonction DNS comprend des indications sur les applications Intemet dans les serveurs respectifs, que le dispositif de commande peut fournir à l'utilisateur par l'intermédiaire de ISDN Bearer Channe).

3. Dispositif de commande selon l'une quelconque des revendications 1 ou 2, **caractérisé en ce que**
a) les autorisations d'un utilisateur défini sont mémorisées dans la fonction SCP en ce qui concerne des serveurs déterminés resp. des applications Internet déterminées,
b) les conditions d'autorisation d'un utilisateur défini sont mémorisées dans la fonction DNS en ce qui concerne des serveurs déterminés resp. des applications Intemet déterminées,
c) la fonction SCP est exécutée de telle manière qu'elle exécute la vérification d'autorisation d'un utilisateur, du fait qu'elle demande à la fonction DNS les conditions d'autorisation à l'accès au serveur demandé par un utilisateur resp. aux applications Internet et qu'elle compare ces conditions aux autorisations de l'utilisateur.

4. Dispositif de commande selon l'une quelconque des revendications 1 à 3, **caractérisé en ce que** l'unité de taxe pour l'accès à un serveur déterminé resp. à une application Internet déterminée est mémorisée dans la fonction SCP.

5. Dispositif de commande selon l'une quelconque des revendications 1 à 4, **caractérisé en ce que**
a) des groupes d'utilisateurs sont mémorisés dans la fonction SCP, auxquels l'accès à des serveurs déterminés resp. à des applications Internet déterminées est exclusivement réservé,
b) la fonction SCP est exécutée de telle manière qu'elle vérifie l'accès d'un utilisateur aux dits serveurs déterminés resp. aux dites applications Internet déterminées à l'aide des groupes d'utilisateurs mémorisés.

6. Dispositif de commande selon l'une quelconque des revendications 1 à 5, **caractérisé en ce que** la fonction SCP, en cas d'utilisateurs mobiles, mémorise l'information de routage pour la dernière application utilisée jusqu'à la fin de l'utilisation.

7. Dispositif de commande selon l'une quelconque des revendications 1 à 6, **caractérisé en ce que** le dispositif de commande représente lui-même un serveur Internet au regard d'autres serveurs Internet et qu'il peut donc échanger des données avec d'autres serveurs Internet.

8. Procédé de commande de l'accès à des services Internet au moyen du réseau intelligent, selon lequel
a) il est signalé à un dispositif de commande (ISN) de lN par un IN-T1n, par sélection d'un code de service correspondant, qu'une connexion à un service Internet est demandée,
b) un routeur est déterminé par le dispositif de commande, au moyen duquel un routage optimal vers le service Internet demandé est rendu possible
c) la composante SCP est soutenue par la fonction DNS lors de ladite détermination par l'évaluation de l'adresse du service Internet demandé,
d) le dispositif de commande entraîne qu'une connexion est établie vers le serveur mentionné par l'intermédiaire du routage déterminé.
